(19) Europäisches Patentamt / European Patent Office / Office européen des brevets

(11) **EP 3 942 180 B1**

(12) **FASCICULE DE BREVET EUROPEEN**

(45) Date de publication et mention de la délivrance du brevet:
**10.06.2026 Bulletin 2026/24**

(21) Numéro de dépôt: **20710182.5**

(22) Date de dépôt: **16.03.2020**

(51) Classification Internationale des Brevets (IPC):
**F03H 1/00** $^{(2006.01)}$ **B64G 1/40** $^{(2006.01)}$

(52) Classification Coopérative des Brevets (CPC):
**F03H 1/0018; B64G 1/413**

(86) Numéro de dépôt international:
**PCT/EP2020/057109**

(87) Numéro de publication internationale:
**WO 2020/187835 (24.09.2020 Gazette 2020/39)**

(54) **PROCEDE DE CONTROLE D'UN PROPULSEUR IONIQUE, ET SYSTEME DE PROPULSION IONIQUE**

VERFAHREN ZUR STEUERUNG EINES IONENTRIEBWERKS UND IONENTRIEBWERK

METHOD FOR CONTROLLING AN ION THRUSTER, AND ION THRUSTER SYSTEM

(84) Etats contractants désignés:
AL AT BE BG CH CY CZ DE DK EE ES FI FR GB GR HR HU IE IS IT LI LT LU LV MC MK MT NL NO PL PT RO RS SE SI SK SM TR

(30) Priorité: **18.03.2019 FR 1902767**

(43) Date de publication de la demande:
**26.01.2022 Bulletin 2022/04**

(73) Titulaire: **Centre national de la recherche scientifique**
**75016 Paris (FR)**

(72) Inventeur: **GIERAK, Jacques**
**91220 Le Plessis-Pate (FR)**

(74) Mandataire: **IPAZ**
**Parc Les Algorithmes**
**Bâtiment Platon**
**91190 Saint Aubin (FR)**

(56) Documents cités:
FR-A1- 2 823 005     US-A1- 2003 066 969
US-A1- 2010 251 690

• SCHARLEMANN C ET AL: "Qualifciation test series of the indium needle FEEP micro-propulsion system for LISA Pathfinder", ACTA ASTRONAUTICA, PERGAMON PRESS, ELMSFORD, GB, vol. 69, no. 9, 31 May 2011 (2011-05-31), pages 822 - 832, XP028272300, ISSN: 0094-5765, [retrieved on 20110628], DOI: 10.1016/J.ACTAASTRO.2011.05.037
• DANDAVINO S ET AL: "Microfabricated electrospray emitter arrays with integrated extractor and accelerator electrodes for the propulsion of small spacecraft", JOURNAL OF MICROMECHANICS & MICROENGINEERING, INSTITUTE OF PHYSICS PUBLISHING, BRISTOL, GB, vol. 24, no. 7, 6 June 2014 (2014-06-06), pages 75011, XP020266898, ISSN: 0960-1317, [retrieved on 20140606], DOI: 10.1088/0960-1317/24/7/075011
• HILL FRANCES ANN ET AL: "High-Throughput Ionic Liquid Ion Sources Using Arrays of Microfabricated Electrospray Emitters With Integrated Extractor Grid and Carbon Nanotube Flow Control Structures", JOURNAL OF MICROELECTROMECHANICAL SYSTEMS, IEEE SERVICE CENTER, US, vol. 23, no. 5, 1 October 2014 (2014-10-01), pages 1237 - 1248, XP011560293, ISSN: 1057-7157, [retrieved on 20140929], DOI: 10.1109/JMEMS.2014.2320509

• LUCA CERUTI ET AL: "POWER PROCESSING CONTROL UNITS FOR FEEP MICRO-PROPULSION SUBSYSTEMS", PROCEEDINGS OF THE 8TH EUROPEAN SPACE POWER CONFERENCE, 14-19 SEPTEMBER 2008, CONSTANCE, GERMANY. ESA-SP VOL. 661, 1 September 2008 (2008-09-01), XP055663367, ISBN: 978-92-9-221225-4

## Description

### Domaine technique

La présente invention concerne un procédé de contrôle d'un propulseur ionique. Elle concerne également un système de propulsion ionique mettant en œuvre un tel procédé.

Le domaine de l'invention est, de manière non limitative, celui de la propulsion des engins spatiaux.

### État de la technique

Pour les engins spatiaux, tels que des satellites, différentes technologies de propulsion sont connues, telles que la propulsion chimique, la propulsion à gaz froid, ou la propulsion électrique.

Les satellites miniaturisés, tels que les CubeSats, sont de plus en plus utilisés pour la transmission d'informations et l'exploration spatiale.

Contrairement aux satellites conventionnels, les satellites miniaturisés permettent de considérablement réduire le coût associé à leur déploiement. Ces satellites ont également l'avantage de présenter une plus grande maniabilité.

Pour ces petits satellites, des systèmes de propulsion et de contrôle appropriés sont nécessaires. Les technologies de propulsion connues ont cependant l'inconvénient qu'elles ne s'adaptent pas facilement à des satellites de petite taille pour des raisons techniques ou d'efficacité. Par exemple, la vitesse d'échappement de ces propulseurs chimiques est limitée par l'énergie spécifique inhérente libérée par la combustion. De plus, les réservoirs de combustible et les systèmes d'alimentation pour les propulseurs chimiques ou ceux à base de gaz ionisés sont volumineux et lourds, ce qui les rend incompatibles avec la propulsion des satellites miniaturisés et les petits engins spatiaux.

Des propulseurs basés sur des électrosprays, appelés propulseurs ioniques, ont été proposés. La technologie de l'électrospray est une forme de propulsion électrique qui génère de la poussée à partir d'un liquide ionique en éjectant et en accélérant des ions dans un champ électrostatique de l'ordre du milliard de Volts par mètre. Un exemple est celui des propulseurs utilisant la propulsion électrique à émission de champ. Ce type de propulseur est notamment adapté pour les applications nécessitant des valeurs de poussée dans le domaine du micro-Newton à quelques milli-Newton pour contrôler l'orientation et la position d'engins spatiaux ayant des masses comprises entre 1 kg et 300 kg.

Les propulseurs ioniques consistent essentiellement en une électrode d'émission comprenant un ensemble d'émetteurs, une électrode d'extraction, un réservoir d'agent propulseur et, dans certains cas, une électrode d'accélération.

Un exemple d'un tel système est décrit dans P. C. Lozano, « Less in Sapce », American Scientist, Volume 104, Page 270 (2016). L'électrode d'émission présente une pluralité d'émetteurs alignés en forme de pointes poreuses infusées de liquide ionique, ainsi qu'une électrode d'extraction et une électrode d'accélération dont les ouvertures respectives sont alignées avec les pointes.

Un autre exemple d'un système de propulsion ionique est décrit dans S. Dandavino et al., « Microfabricated electrospray emitter arrays with integrated extractor and accelerator electrodes for the propulsion of small spacecraft », J. Micromech. Microeng., 24, 075011 (2014), dans lequel les émetteurs comprennent un micro-tube capillaire pour amener le liquide propulseur à son extrémité d'où il est ionisé.

Un autre exemple d'un système de propulsion ionique est décrit dans I. Vasiljevich et al., « Development of an Indium mN-FEEP Thruster », 44th AIAA/ASME/SAE/ASEE Joint Propulsion Conference & Exhibit, 21 - 23 July 2008, Hartford, CT, dans lequel un film d'indium liquide amené à son point de fusion par chauffage diffuse dans une ensemble de structures micro-poreuses d'où il est ionisé par l'application d'un champ électrique.

Une différence de potentiel de l'ordre de 1-10 kV est appliquée pour générer un fort champ électrique local à la pointe de l'émetteur. Ce champ électrique déforme le film de propulseur liquide en une structure conique dite cône de Taylor situé à la pointe de l'émetteur et extrait des particules chargées au sommet du cône. Les particules chargées sont ensuite accélérées à des vitesses élevées de l'ordre de quelques dizaines de kilomètres par seconde par le champ électrique appliqué.

La poussée d'un propulseur ionique est une fonction du flux, ou courant d'émission, et de la vitesse des ions éjectés par celui-ci. Pour un fonctionnement efficace d'un tel propulseur, le flux et la vitesse des ions éjectés doivent être contrôlés.

### Exposé de l'invention

Un but de la présente invention est de proposer un procédé de contrôle d'un propulseur ionique permettant de contrôler la vitesse des ions éjectés indépendamment du courant d'émission.

Un autre but de la présente invention est de proposer un procédé de contrôle d'un propulseur ionique permettant de contrôler la poussée du propulseur indépendamment de la polarité des ions émis.

Il est encore un but de la présente invention de proposer un procédé de contrôle d'un propulseur ionique permettant une opération prolongée sans déplétion des espèces ioniques émises et donc une accumulation de contre-ions dans le propulseur.

Il est encore un but de la présente invention de proposer un procédé de contrôle d'un propulseur ionique présentant une grande efficacité et qui convient à une utilisation dans des nano-satellites (environ 1 kg - 50 kg) et des micro-satellites (environ 50 kg - 300 kg).

Au moins un de ces buts est atteint avec un procédé de contrôle d'un propulseur ionique, le propulseur ionique comprenant une électrode d'émission, une électrode d'extraction et un liquide conducteur déposé sur l'électrode d'émission, le propulseur ionique étant adapté pour émettre un faisceau ionique lorsqu'un champ électrique est appliqué au liquide conducteur, le faisceau ionique étant adapté pour procurer une poussée au propulseur, la poussée dépendant d'un courant d'émission $I_{em}$ et d'une vitesse d'émission d'ions, caractérisé en ce que le procédé comprend les étapes suivantes :

- réglage du courant d'émission à une valeur de consigne $I_c$ par l'application d'un potentiel d'émission seuil $V_{seuil}$ à l'électrode d'émission au moyen d'un générateur de courant ; et
- lorsque la valeur de consigne $I_c$ du courant d'émission est atteinte, réglage de la vitesse d'émission par l'application d'un potentiel d'extraction $V_{ext}$ à l'électrode d'extraction au moyen d'un générateur de tension, de sorte à porter le potentiel d'émission $V_{em}$ à une valeur prédéterminée $V_{em} = V_{seuil} + V_{ext}$.

La poussée du propulseur, appelée *thrust* en anglais et exprimée en Newtons, est définie comme :

[Math 1]

$$T\,[N] = \sqrt{2\,\frac{1}{\left(\frac{q}{m}\right)}}\,I_{em} \times \sqrt{V_{em}},$$

avec respectivement $q$ la charge de la particule éjectée, $m$ sa masse, $I_{em}$ le courant ou le flux éjecté et $V_{em}$ le potentiel de l'émetteur.

Le procédé de contrôle d'un propulseur ionique selon l'invention propose une étape de réglage du courant d'émission, correspondant à une phase d'activation du propulseur, et une étape de réglage de la vitesse d'émission, correspondant à une phase d'augmentation de la vitesse des ions éjectés.

Pendant la phase d'activation, l'éjection d'ions est amorcée, en appliquant un potentiel d'émission sur l'électrode d'émission au moyen d'une source de courant. Ainsi, un champ électrique local est créé au niveau de l'électrode d'émission de l'ordre, par exemple, de $10^9$ V/m, nécessaire à l'éjection d'ions par évaporation de champ. Le flux, ou le nombre d'ions éjectés est déterminé par une valeur de consigne du courant d'émission, cette valeur étant délivrée et régulée par la source de courant. La valeur de consigne du courant d'émission est atteinte avec un potentiel d'émission seuil. La source de courant est constituée, par exemple, par une alimentation haute tension opérée en mode « source de courant », adaptée pour délivrer rapidement le courant d'ions souhaité.

Pendant la phase d'augmentation de la vitesse des ions, la vitesse, et donc l'énergie, des ions éjectés est choisie en portant l'électrode d'extraction à un potentiel d'extraction au moyen d'une source de tension. Le réglage du potentiel d'extraction permet donc de choisir, ajuster et maintenir la vitesse, et donc le potentiel faisceau des ions à un niveau souhaité. Ici, le terme potentiel faisceau désigne le potentiel résultant entre les potentiels d'émission et d'extractions appliqués aux électrodes d'émission et d'extraction, respectivement.

Lorsque la valeur seuil du potentiel d'émission évolue, le potentiel faisceau peut ainsi être ajusté pour maintenir un fonctionnement correct du propulseur pendant de longues périodes. Par exemple, la valeur seuil peut augmenter dû à la déplétion d'espèces dans le liquide conducteur, et simultanément une accumulation des contre-ions qui vont affecter la mobilité des espèces ioniques d'intérêt. Il est donc possible de suivre la dégradation du liquide conducteur en observant l'évolution de la valeur seuil du potentiel d'émission ou la valeur du potentiel faisceau ajusté. Aussi, il est possible d'introduire, de manière automatisée, des contre-mesures pour ne pas dépasser un seuil de déplétion critique pour l'espèce ionique émise ainsi que le corollaire qui est l'accumulation des contre-ions et ainsi protéger le propulseur de réactions chimiques dégradantes dû à ces mécanismes croisés d'accumulation et déplétion cumulatifs.

Grâce au procédé de contrôle selon l'invention, l'émission et l'accélération des ions sont contrôlées indépendamment l'un de l'autre, permettant une exploitation améliorée et prolongée du propulseur ionique. Aussi, le procédé de contrôle selon l'invention permet l'éjection et l'accélération d'ions indépendamment quelle que soit leur polarité.

Préférentiellement, l'étape de réglage du courant d'émission peut être réalisée par l'augmentation progressive de la valeur du potentiel appliqué à l'électrode d'émission de 0 à la valeur de seuil $V_{seuil}$ pour laquelle le courant d'émission $I_{em}$ atteint la valeur de consigne $I_c$.

Selon un autre exemple de réalisation de l'invention, l'étape de réglage de la vitesse d'émission peut être réalisée par l'une des étapes suivantes :

- application d'un potentiel de 0 V,
- application d'un potentiel du même signe que le potentiel d'émission, ou
- application d'un potentiel de signe opposé par rapport à celui du potentiel d'émission.

Dans le cas d'un potentiel d'extraction $V_{ext}$ de même signe que le potentiel d'émission $V_{em}$, il est possible d'augmenter, d'ajuster et de maintenir le potentiel faisceau à une valeur où l'efficacité propulsive du propulseur est maximale, tout en restant dans les limites de la valeur des potentiels disponibles, par exemple à bord d'un satellite.

Dans le cas d'un potentiel d'extraction $V_{ext}$ de signe opposé que celui du potentiel d'émission $V_{em}$, il est possible de réduire, d'ajuster et de maintenir le potentiel faisceau à une valeur de potentiel disponible pour le propulseur. Par exemple, si le potentiel seuil est de 7 kV, alors que la valeur du potentiel maximum disponible est de seulement 5 kV, il est possible, en appliquant -2 kV à l'électrode d'extraction, d'obtenir une émission d'ions un potentiel faisceau de 5 kV et ainsi de rester dans la gamme des tensions disponibles.

Dans le cas d'un potentiel d'extraction de 0 V, l'émission des ions est obtenue pour le potentiel seuil appliqué à l'électrode d'émission.

Selon un exemple, l'étape de réglage du courant d'émission peut comprendre une étape d'asservissement de la valeur de consigne $I_c$ du courant d'émission.

Pour cela, le courant émis peut être mesuré au niveau de l'électrode d'extraction, ou par un dispositif de mesure de l'intensité du courant électrique délivré placé dans le générateur de courant et asservi par comparaison à la valeur de consigne demandée. Cette étape d'asservissement permet de régler le courant de consigne de manière automatique.

Selon un mode de réalisation de l'invention, l'étape de réglage du courant d'émission peut comprendre en outre une étape d'ajustement du courant d'émission.

Selon un exemple, l'ajustement du courant d'émission peut être réalisé par l'ajustement du potentiel appliqué à l'électrode d'émission $V_{em}$.

Pour cela, la valeur de consigne du courant d'émission peut être légèrement variée autour de la valeur de consigne $I_c$ d'origine. Cette étape d'ajustement permet de régler le flux des ions, et donc la masse éjectée par l'électrode d'émission, très finement.

Selon un mode de réalisation nullement limitatif de l'invention, l'étape de réglage de la vitesse d'émission peut comprendre en outre une étape d'ajustement de la vitesse d'émission.

Par exemple, l'étape d'ajustement de la vitesse d'émission peut être réalisée par le réglage du potentiel appliqué à l'électrode d'extraction $V_{ext}$.

Cette étape permet notamment de revenir à une vitesse d'émission souhaitée après un réglage du flux qui aurait pu modifier la vitesse d'émission.

Les étapes d'ajustement du courant d'émission et/ou de la vitesse d'émission permettent de contrôler ou réguler très finement la poussée du propulseur.

Selon un exemple de réalisation nullement limitatif, le procédé de l'invention peut comprendre en outre une étape d'arrêt du propulseur ionique. L'étape d'arrêt peut comprendre les étapes suivantes :

- diminution progressive de la valeur du potentiel d'extraction $V_{ext}$, de sorte à obtenir $V_{ext} = 0$ et $V_{em} = V_{seuil}$,
- diminution progressive de la valeur du potentiel d'émission $V_{em}$, de sorte à obtenir $V_{em} = 0$.

De manière avantageuse, le procédé selon l'invention peut comprendre une itération des étapes de réglage et d'ajustement du courant d'émission, de réglage et d'ajustement de la vitesse d'émission et de l'étape d'arrêt, dans lequel à chaque nouveau cycle de l'itération, les polarités du potentiel d'émission $V_{em}$ et du potentiel d'extraction sont inversées par rapport au cycle précédent.

En changeant régulièrement de polarité d'ions, le procédé selon l'invention permet notamment de prolonger la durée de vie du liquide conducteur du propulseur, en ralentissant la déplétion d'espèces chimiques et simultanément l'accumulation des contre-ions. Ceci limite la masse et le volume nécessaires de liquide conducteur.

Suivant un autre aspect de la même invention, il est proposé un système de propulsion ionique, comprenant un propulseur ionique comprenant une électrode d'émission, une électrode d'extraction et un liquide conducteur déposé sur l'électrode d'émission, le système comprenant en outre un générateur de courant lié à l'électrode d'émission et un générateur de tension lié à l'électrode d'extraction, le système comprenant un contrôleur lié au générateur de courant et au générateur de tension, le contrôleur étant adapté pour mettre en œuvre le procédé selon l'invention.

Le liquide conducteur peut comprendre un liquide ionique ou un liquide métallique, c'est-à-dire, un liquide rendu conducteur ou un métal liquide ou fondu.

Les sources d'ions métalliques liquides (« *liquid metal ion sources* » en anglais, LMIS) peuvent, par exemple, inclure du gallium, de l'indium, de l'or et des métaux ou des alliages alcalins.

Les liquides ioniques peuvent inclure, par exemple, des sels d'anions et de cations organiques volumineux. Les cations peuvent inclure, par exemple, des sels de phosphate, d'ammonium ou de sulfate. Les anions peuvent inclure, par exemple, du chlorure, du bromure, du tétrafluoroborate, de l'hexafluorophosphate, etc.

De manière avantageuse, le système selon l'invention peut être mis en œuvre dans un satellite, notamment du type CubeSat.

Le système et le procédé selon l'invention sont particulièrement adaptés pour contrôler l'orientation et la position de petits satellites.

## Description des figures et modes de réalisation

D'autres avantages et caractéristiques apparaîtront à l'examen de la description détaillée d'exemples nullement limitatifs, et des dessins annexés sur lesquels :

- la Figure 1 est une représentation schématique d'un exemple de réalisation non-limitatif d'un système de propulsion mis en œuvre dans la présente invention ;

- la Figure 2 est une représentation schématique d'un exemple non-limitatif d'un procédé de contrôle d'un propulseur selon la présente invention ;

- la Figure 3 illustre une courbe caractéristique d'un propulseur pour une étape du procédé selon la présente invention ;

- la Figure 4 illustre une courbe caractéristique d'un propulseur pour une autre étape du procédé selon la présente invention ;

- la Figure 5 illustre une courbe caractéristique d'un propulseur pour une autre étape du procédé selon la présente invention ; et

- la Figure 6 illustre une courbe caractéristique d'un propulseur pour une autre étape du procédé selon la présente invention.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à l'état de la technique antérieure. Cette sélection comprend au moins une caractéristique de préférence fonctionnelle sans détails structurels, ou avec seulement une partie des détails structurels si cette partie uniquement est suffisante pour conférer un avantage technique ou pour différencier l'invention par rapport à l'état de la technique antérieure.

En particulier toutes les variantes et tous les modes de réalisation décrits sont combinables entre eux si rien ne s'oppose à cette combinaison sur le plan technique.

Sur les figures, les éléments communs à plusieurs figures conservent la même référence.

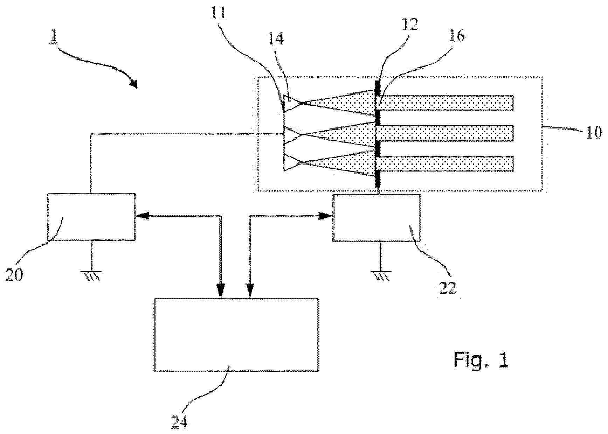

La Figure 1 est une représentation schématique d'un exemple de réalisation non-limitatif d'un système de propulsion ionique pouvant être mis en œuvre dans le cadre de la présente invention. Le système peut notamment être utilisé pour mettre en œuvre le procédé de l'invention.

Le système 1, représenté sur la Figure 1, est agencé pour produire un faisceau ionique, adapté pour procurer une propulsion ionique au système 1.

Le système 1 comprend un propulseur ionique 10, comprenant une électrode d'émission 11 et une électrode d'extraction 12.

L'électrode d'émission 11 comprend une pluralité d'émetteurs 14, par exemple en forme de pointes. Les émetteurs 14 sont recouverts par un liquide conducteur. Ce liquide conducteur peut être, par exemple, un liquide ionique, un liquide rendu conducteur ou un métal liquide ou fondu. Lorsqu'un champ électrique est généré entre les deux électrodes 11, 12, un champ électrique local très fort (de l'ordre de $10^9$ V/m) est généré au niveau des pointes, ce qui entraîne le liquide conducteur à former un cône de Taylor situé à une pluralité de pointes 14 de l'électrode d'émission 10. Des ions sont alors émis au sommet de chaque cône. Les particules chargées sont ensuite accélérées à des vitesses élevées de l'ordre de quelques dizaines de kilomètres par seconde par le champ électrique appliqué.

L'électrode d'extraction 12 peut consister, par exemple, en une plaque métallique agencée en face de l'électrode d'émission 11 et ayant des ouvertures 16 pour laisser passer le flux d'ions.

Le faisceau ionique généré par le propulseur 10 procure une poussée à celui-ci. La poussée dépend d'un courant

d'émission $I_{em}$ et du potentiel appliqué à l'émetteur correspondant à une vitesse d'émission d'ions.

Le système 1 représenté sur la Figure 1 comprend également une première alimentation 20 haute tension pour alimenter l'électrode d'émission 11 et une deuxième alimentation 22 haute tension pour alimenter l'électrode d'extraction 12.

La première alimentation 20 est un générateur haute tension fonctionnant en mode source de courant. Ceci signifie que le générateur 20 est adapté pour délivrer un courant constant correspondant à une valeur de consigne et d'en minimiser les variations.

La deuxième alimentation 22 est un générateur haute tension fonctionnant en mode source de tension. Ceci signifie que le générateur 22 est adapté pour délivrer une tension de sortie stable et d'en minimiser les variations.

Comme illustré sur la Figure 1, la première 20 et la deuxième alimentation 22 sont indépendantes l'une de l'autre, les deux étant chacune directement liées à la masse.

Enfin, le système 1 comprend un contrôleur 24 lié aux alimentations haute tension 20, 22 permettant de contrôler les alimentations 20, 22, selon un procédé de contrôle du propulseur dans le cadre de la présente invention.

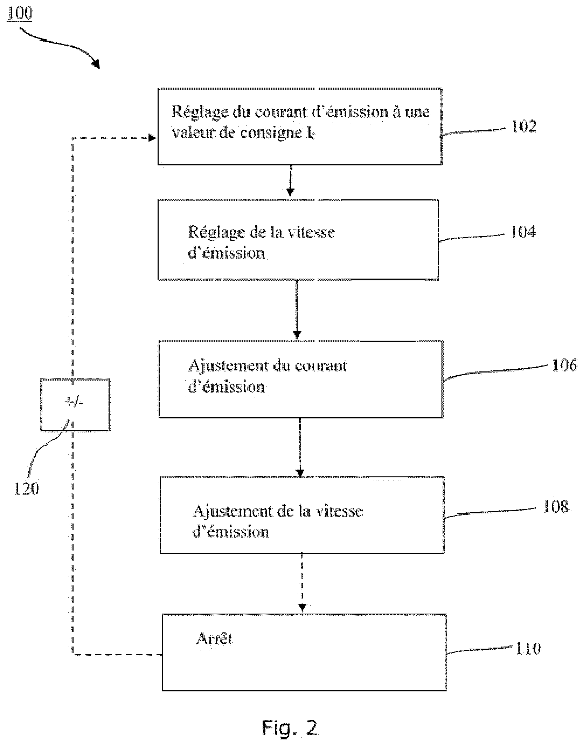

La Figure 2 est une représentation schématique d'un exemple de réalisation non-limitatif d'un procédé de contrôle d'un propulseur ionique selon l'invention.

Le procédé 100, représenté sur la Figure 2, comprend une étape 102 de réglage du courant d'émission à une valeur de consigne $I_c$. Le courant d'émission correspond aux flux d'ions émis par les émetteurs 14. La valeur de consigne peut être, par exemple, de 50 $\mu$A.

Le réglage du courant d'émission est réalisé par l'application d'une tension d'émission seuil $V_{seuil}$ à l'électrode d'émission 11 au moyen du générateur de courant 20. Grâce au générateur de courant 20, le courant d'ions émis peut être régulé précisément. La valeur du courant de consigne $I_c$ est maintenue constante. Pour ce faire, système 1 selon l'invention peut comprendre un dispositif de mesure du courant d'émission afin de réaliser un asservissement de cette valeur de courant. Le dispositif de mesure peut comprendre, par exemple, un micro-ampèremètre placé dans le générateur de courant 20, ou un ampèremètre placé au niveau de l'électrode d'extraction 12.

Les conditions initiales pour la réalisation de l'étape 102 de réglage du courant d'émission sont les suivantes : tension appliquée à l'électrode d'émission $V_{em} = 0$ et tension appliquée à l'électrode d'extraction $V_{ext} = 0$. La tension $V_{em}$ appliquée à l'électrode d'émission 11 est ensuite augmentée progressivement, par exemple par pas de 500 V. $V_{em}$ est augmentée jusqu'à ce que le courant émis par le générateur de courant 20 atteigne sa valeur de consigne $I_c$. Pour garder la valeur de consigne $I_c$ constante, la valeur de $V_{em}$ est ajustée automatiquement grâce à l'asservissement du courant d'émission.

La valeur de $V_{em}$ correspond à la valeur seuil $V_{seuil}$ du potentiel pour lequel une émission d'ions est obtenue, cette valeur étant caractéristique du propulseur ionique 10. Cette valeur peut être, par exemple, de 5000 V.

A la fin de l'étape 102 de réglage du courant d'émission, le propulseur 10 émet un flux d'ions correspondant à une certaine masse de matière éjectée, mais dont la vitesse d'émission n'est pas encore nominale, ou optimale, par rapport à une valeur de poussée $T$ demandée.

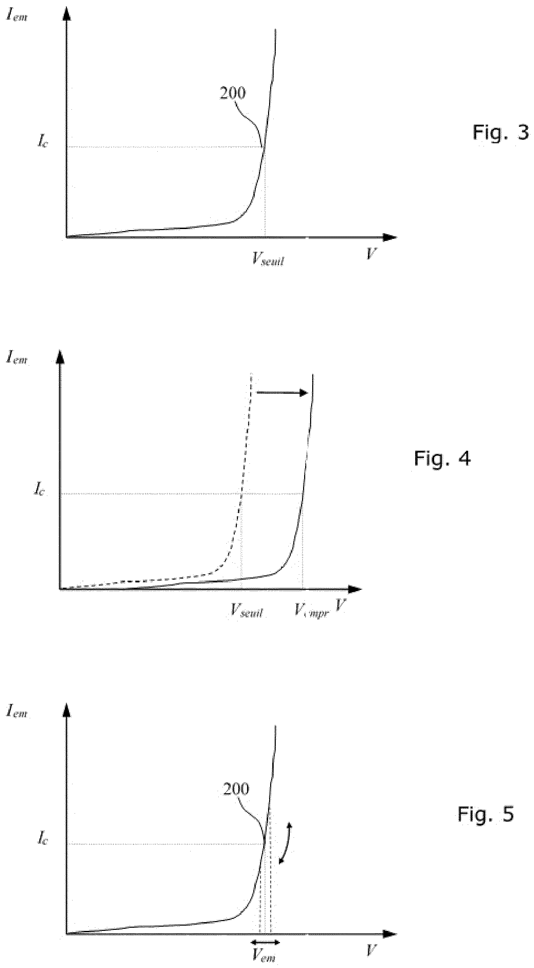

La Figure 3 illustre une courbe caractéristique du courant d'émission $I_{em}$ en fonction du potentiel faisceau V appliqué entre les électrodes 11, 12 du propulseur 10. La valeur de consigne $I_c$ du courant est atteinte pour la tension $V_{seuil}$ appliqué à l'électrode d'émission, et aucune tension appliquée à l'électrode d'extraction, ce qui définit un point de fonctionnement 200 du propulseur.

Lors d'une étape 104 de réglage de la vitesse d'émission, du procédé 100 selon le mode de réalisation de la Figure 2, une tension d'extraction $V_{ext}$ est appliquée à l'électrode d'extraction 12 au moyen du générateur de tension 22. Ainsi, le potentiel d'émission entre les électrodes 11, 12 est porté à une valeur programmée $V_{empr}$, de sorte à ce que $V_{empr} = V_{seuil} + V_{ext}$.

Le potentiel programmé $V_{empr}$ correspond à un potentiel faisceau prédéterminé pour lequel la poussée atteint une valeur demandée. La valeur $V_{empr}$ peut être prédéterminée, par exemple, par calcul du contrôleur 24 embarqué ou par un centre de contrôle distant et envoyée au contrôleur 24.

Les conditions initiales pour la réalisation de l'étape 104 de réglage de la vitesse d'émission sont les suivantes : tension appliquée à l'électrode d'émission $V_{em} = V_{seuil}$ et tension appliquée à l'électrode d'extraction $V_{ext} = 0$. Selon un exemple de réalisation, la tension $V_{ext}$ appliquée à l'électrode d'extraction 12 est ensuite augmentée progressivement, par exemple, par pas de 50 V. Le signe de la tension $V_{ext}$ est le même que celui de la tension $V_{seuil}$. L'augmentation de la valeur de la tension $V_{ext}$ à l'électrode d'extraction est régie par une loi variable en fonction du temps, de type asymptotique, ce qui permet d'éviter des phénomènes de décharges ou de claquages électriques. $V_{ext}$ est augmentée jusqu'à ce que le potentiel d'émission atteigne la valeur programmée $V_{empr}$.

La Figure 4 illustre le déplacement de la courbe caractéristique $I_{em}(V)$ pour l'étape 104 de réglage de la vitesse d'émission. Dans cet exemple, la valeur de V est augmentée de $V_{seuil}$ à $V_{empr}$ par l'application de la tension d'extraction $V_{ext}$ à l'électrode d'extraction, et la valeur du courant d'émission reste la valeur de consigne $I_c$.

Selon d'autres exemples de réalisation, la tension $V_{ext}$ peut être 0, ou encore de signe opposé par rapport à celui de la tension d'émission $V_{em}$.

A la fin de l'étape 104 de réglage de la vitesse d'émission, la valeur du courant d'émission correspond toujours à la valeur de consigne $I_c$.

Le procédé 100 selon le mode de réalisation représenté sur la Figure 2 comprend en outre une étape 106 d'ajustement du courant d'émission. Cette étape 106 permet de réguler et de contrôler la poussée du propulseur 10 en agissant sur le flux d'ions et donc la masse éjectée.

Lors de cette étape 106, le courant d'émission peut être réduit ou augmenté en modifiant la valeur de consigne de ce courant envoyée au générateur de courant 20. L'effet de cette étape est illustré sur la Figure 5. Une faible variation de la tension $V_{em}$ appliquée à l'électrode d'émission peut significativement modifier le courant d'émission, ce qui permet un ajustement très fin du flux d'ions.

La Figure 5 illustre le déplacement du point de fonctionnement 200 sur la courbe caractéristique $I_{em}(V)$ pour l'étape 106 d'ajustement du courant d'émission lorsque la tension d'émission $V_{em}$ est variée.

Le procédé 100 selon le mode de réalisation représenté sur la Figure 2 comprend en outre une étape 108 d'ajustement de la vitesse d'émission. Cette étape 108 permet un réglage fin et le maintien de la vitesse d'émission pour obtenir la poussée demandée du propulseur. En effet, lors de l'étape 106 d'ajustement du courant d'émission, le potentiel d'émission peut ne plus correspondre au potentiel d'émission $V_{empr}$ prédéterminé.

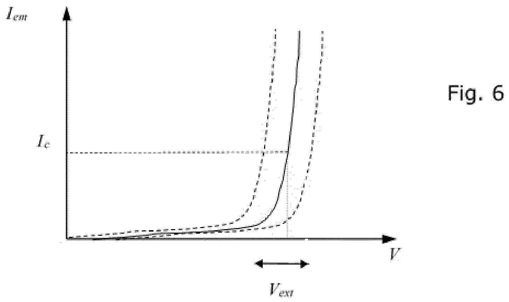

L'ajustement lors de l'étape 108 peut être réalisé par une variation de la tension d'extraction $V_{ext}$, comme illustré sur la Figure 6. Le potentiel d'émission est donné par la somme des tensions appliquées aux électrodes, $V_{em} = V_{seuil} + V_{ext}$. Le potentiel d'émission seuil $V_{seuil}$ est une caractéristique physique donnée par la géométrie de l'émetteur, pouvant être altérée par divers mécanismes de vieillissement affectant par exemple la morphologie de l'émetteur ou encore les caractéristiques physico-chimiques du liquide conducteur utilisé comme agent de propulsion. Il est alors possible de ramener le potentiel d'émission à la valeur $V_{empr}$ souhaitée en variant la tension d'extraction $V_{ext}$.

Cette étape 108 d'ajustement de la vitesse d'émission permet ainsi également de compenser une déplétion de l'espèce d'ions d'intérêt présents dans le liquide conducteur, nécessitant de fournir plus d'énergie pour extraire cette espère raréfiée et conduisant à une augmentation de la valeur seuil du potentiel d'émission.

La Figure 6 illustre le déplacement de la courbe caractéristique $I_{em}(V)$ pour l'étape 108 d'ajustement de la vitesse d'émission, réalisée en variant la valeur de la tension d'extraction $V_{ext}$.

Grâce aux amplitudes d'ajustement des tensions d'émission et d'extraction, il est possible de maintenir le propulseur en opération pendant de longues périodes, grâce à la compensation de la déplétion des espèces ioniques émises.

Selon un mode de réalisation avantageux de l'invention, le procédé 100 comprend une phase d'arrêt 110 du propulseur. Lors de la phase d'arrêt 110, l'alimentation des électrodes et donc l'émission du faisceau d'ions sont arrêtées.

Selon un exemple de mise en œuvre, pour effectuer cette phase d'arrêt 110, la valeur de la tension d'extraction $V_{ext}$ appliquée à l'électrode d'extraction 12 est diminuée progressivement jusqu'à 0, de sorte à revenir à un potentiel d'émission $V_{em} = V_{seuil}$. Lorsque $V_{ext} = 0$, la valeur de la tension d'émission $V_{em}$ appliquée à l'électrode d'émission 11 est diminuée progressivement jusqu'à 0.

D'autres types de déroulement de la phase d'arrêt peuvent bien sûr être appliqués.

La réalisation de la phase d'arrêt 110 permet notamment de remettre le propulseur en marche avec une polarité inversée, permettant d'utiliser les ions de polarité opposée à celle des ions du cycle d'opération précédent du propulseur. Ainsi, la déplétion d'une espèce dans le liquide conducteur est fortement ralentie. La remise en marche du propulseur avec une polarité inverse après un arrêt est indiquée par la référence 120 sur la Figure 2. La remise en marché peut être réalisée en inversant les polarités des tensions d'émission et d'extraction par rapport à celles utilisées pendant le cycle précédent.

Pour une opération prolongée du propulseur, il est alors possible d'effectuer une itération des étapes de réglage et d'ajustement du courant d'émission, de réglage et d'ajustement de la vitesse d'émission et de l'étape d'arrêt, où à chaque nouveau cycle de l'itération, les polarités du potentiel d'émission $V_{em}$ et du potentiel d'extraction $V_{ext}$ sont inversées par rapport au cycle précédent.

Bien sûr, l'invention n'est pas limitée aux exemples qui viennent d'être décrits et de nombreux aménagements peuvent être apportés à ces exemples sans sortir du cadre de l'invention.

## Revendications

1. Procédé (100) de contrôle d'un propulseur ionique (10), le propulseur ionique comprenant une électrode d'émission (11), une électrode d'extraction (12) et un liquide conducteur déposé sur l'électrode d'émission (11), le propulseur ionique (10) étant adapté pour émettre un faisceau ionique lorsqu'un champ électrique est appliqué au liquide conducteur, le faisceau ionique étant adapté pour procurer une poussée au propulseur (10), la poussée dépendant d'un courant d'émission $I_{em}$ et d'une vitesse d'émission d'ions, **caractérisé en ce que** le procédé (100) comprend les étapes suivantes :

- réglage (102) du courant d'émission à une valeur de consigne $I_c$ par l'application d'un potentiel d'émission seuil $V_{seuil}$ à l'électrode d'émission au moyen d'un générateur de courant ; et
- lorsque la valeur de consigne $I_c$ du courant d'émission est atteinte, réglage (104) de la vitesse d'émission par l'application d'un potentiel d'extraction $V_{ext}$ à l'électrode d'extraction au moyen d'un générateur de tension, de sorte à porter le potentiel d'émission $V_{em}$ à une valeur prédéterminée $V_{empr} = V_{seuil} + V_{ext}$.

2. Procédé (100) selon la revendication 1, **caractérisé en ce que** l'étape (102) de réglage du courant d'émission est réalisée par l'augmentation progressive de la valeur du potentiel appliqué à l'électrode d'émission de 0 à la valeur de seuil $V_{seuil}$ pour laquelle le courant d'émission $I_{em}$ atteint la valeur de consigne $I_c$.

3. Procédé (100) selon la revendication 1 ou 2, **caractérisé en ce que** l'étape (104) de réglage de la vitesse d'émission est réalisée par l'une des étapes suivantes :

   - application d'un potentiel de 0 V,
   - application d'un potentiel du même signe que le potentiel d'émission, ou
   - application d'un potentiel de signe opposé par rapport à celui du potentiel d'émission.

4. Procédé (100) selon l'une quelconque des revendications précédentes, **caractérisé en ce que** l'étape (102) de réglage du courant d'émission peut comprendre une étape d'asservissement de la valeur de consigne $I_c$ du courant d'émission.

5. Procédé (100) selon l'une quelconque des revendications précédentes, **caractérisé en ce que** l'étape (102) de réglage du courant d'émission comprend en outre une étape (106) d'ajustement du courant d'émission.

6. Procédé (100) selon la revendication 5, **caractérisé en ce que** l'ajustement du courant d'émission est réalisé par l'ajustement du potentiel appliqué à l'électrode d'émission $V_{em}$.

7. Procédé (100) selon l'une quelconque des revendications précédentes, **caractérisé en ce que** l'étape (104) de réglage de la vitesse d'émission comprend en outre une étape (108) d'ajustement de la vitesse d'émission.

8. Procédé (100) selon la revendication 7, **caractérisé en ce que** l'ajustement de la vitesse d'émission est réalisé par un réglage du potentiel d'extraction $V_{ext}$.

9. Procédé (100) selon l'une quelconque des revendications précédentes, **caractérisé en ce qu'**il comprend en outre une étape (110) d'arrêt du propulseur ionique (10), l'étape d'arrêt comprenant les étapes suivantes :

   - diminution progressive de la valeur du potentiel d'extraction $V_{ext}$, de sorte à obtenir $V_{ext} = 0$ et $V_{em} = V_{seuil}$,
   - diminution progressive de la valeur du potentiel d'émission $V_{em}$, de sorte à obtenir $V_{em} = 0$.

10. Procédé (100) selon la revendication précédente prise en combinaison des revendications 5 et 7, **caractérisé en ce qu'**il comprend une itération des étapes de réglage (102) et d'ajustement (106) du courant d'émission, de réglage (104) et d'ajustement (108) de la vitesse d'émission et de l'étape d'arrêt (110), dans lequel à chaque nouveau cycle de l'itération, les polarités du potentiel d'émission $V_{em}$ et du potentiel d'extraction sont inversées par rapport au cycle précédent.

11. Système (1) de propulsion ionique, comprenant un propulseur ionique (10) comprenant une électrode d'émission (11), une électrode d'extraction (12) et un liquide conducteur déposé sur l'électrode d'émission (11), le système (1) comprenant en outre un générateur de courant (20) lié à l'électrode d'émission (11) et un générateur de tension (22) lié à l'électrode d'extraction (12), le système (1) comprenant un contrôleur (24) lié au générateur de courant (20) et au générateur de tension (22), le contrôleur étant adapté pour mettre en œuvre le procédé (100) selon l'une quelconque des revendications précédentes.

12. Système (1) selon la revendication 11, **caractérisé en ce que** le liquide conducteur comprend l'un d'un liquide ionique, d'un liquide rendu conducteur et d'un métal liquide ou fondu.

13. Satellite, notamment du type CubeSat, comprenant un système (1) de propulsion ionique selon l'une des revendications 11 ou 12.

**Patentansprüche**

1. Verfahren (100) zum Steuern eines Ionentriebwerks (10), das Ionentriebwerk umfassend eine Emissionselektrode (11), eine Extraktionselektrode (12) und eine leitfähige Flüssigkeit, die auf der Emissionselektrode (11) abgelagert ist, wobei das Ionentriebwerk (10) zum Emittieren eines Ionenstrahls geeignet ist, wenn ein elektrisches Feld an die leitfähige Flüssigkeit angelegt wird, wobei der Ionenstrahl zum Verleihen eines Schubs an das Triebwerk (10) angepasst ist, wobei der Schub von einem Emissionsstrom $I_{em}$ und einer Ionenemissionsgeschwindigkeit abhängt, **dadurch gekennzeichnet, dass** das Verfahren (100) die folgenden Schritte umfasst:

   - Regeln (102) des Emissionsstroms auf einen Sollwert $I_c$ durch Anlegen eines Emissionsschwellenpotentials $V_{Schwelle}$ an die Emissionselektrode mittels eines Stromgenerators; und
   - wenn der Sollwert $I_c$ des Emissionsstroms erreicht ist, Regeln (104) der Emissionsgeschwindigkeit durch Anlegen eines Extraktionspotentials $V_{ext}$ an die Extraktionselektrode mittels eines Spannungsgenerators, so dass das Emissionspotential $V_{em}$ auf einen vorbestimmten Wert $V_{empr} = V_{Schwelle} + V_{ext}$ gebracht wird.

2. Verfahren (100) nach Anspruch 1, **dadurch gekennzeichnet, dass** der Schritt (102) zum Regeln des Emissionsstroms durch die progressive Erhöhung des Werts des Potentials, das an die Emissionselektrode angelegt wird, von 0 auf den Schwellenwert $V_{Schwelle}$ durchgeführt wird, für den der Emissionsstrom $I_{em}$ den Sollwert $I_c$ erreicht.

3. Verfahren (100) nach Anspruch 1 oder 2, **dadurch gekennzeichnet, dass** der Schritt (104) zum Regeln der Emissionsgeschwindigkeit durch einen der folgenden Schritte durchgeführt wird:

   - Anlegen eines Potentials von 0 V,
   - Anlegen eines Potentials mit dem gleichen Vorzeichen wie das Emissionspotential, oder
   - Anlegen eines Potentials mit umgekehrtem Vorzeichen in Bezug auf das Emissionspotential.

4. Verfahren (100) nach einem der vorhergehenden Ansprüche, **dadurch gekennzeichnet, dass** der Schritt (102) zum Regeln des Emissionsstroms einen Schritt zum Regeln des Sollwerts $I_c$ des Emissionsstroms umfassen kann.

5. Verfahren (100) nach einem der vorhergehenden Ansprüche, **dadurch gekennzeichnet, dass** der Schritt (102) zum Regeln des Emissionsstroms ferner einen Schritt (106) zum Anpassen des Emissionsstroms umfasst.

6. Verfahren (100) nach Anspruch 5, **dadurch gekennzeichnet, dass** das Anpassen des Emissionsstroms durch das Anpassen des Potentials durchgeführt wird, das an die Emissionselektrode $V_{em}$ angelegt wird.

7. Verfahren (100) nach einem der vorhergehenden Ansprüche, **dadurch gekennzeichnet, dass** der Schritt (104) zum Regeln der Emissionsgeschwindigkeit ferner einen Schritt (108) zum Anpassen der Emissionsgeschwindigkeit umfasst.

8. Verfahren (100) nach Anspruch 7, **dadurch gekennzeichnet, dass** das Anpassen der Emissionsgeschwindigkeit durch ein Regeln des Extraktionspotentials $V_{ext}$ durchgeführt wird.

9. Verfahren (100) nach einem der vorhergehenden Ansprüche, **dadurch gekennzeichnet, dass** es ferner einen Schritt (110) zum Anhalten des Ionentriebwerks (10) umfasst, der Schritt zum Anhalten umfassend die folgenden Schritte:

   - progressives Verringern des Werts des Extraktionspotentials $V_{ext}$, so dass $V_{ext} = 0$ und $V_{em} = V_{Schwelle}$ erhalten wird,
   - progressives Verringern des Werts des Emissionspotentials $V_{em}$, so dass $V_{em} = 0$ erhalten wird.

10. Verfahren (100) nach dem vorhergehenden Anspruch in Kombination mit den Ansprüchen 5 und 7, **dadurch gekennzeichnet, dass** es eine Iteration der Schritte zum Regeln (102) und Anpassen (106) des Emissionsstroms, zum Regeln (104) und Anpassen (108) der Emissionsgeschwindigkeit, und des Anhalteschritts (110) umfasst, wobei bei jedem neuen Zyklus der Iteration die Polaritäten des Emissionspotentials $V_{em}$ und des Extraktionspotentials in Bezug auf den vorhergehenden Zyklus umgepolt werden.

11. Ionenantriebssystem (1), umfassend ein Ionentriebwerk (10), umfassend eine Emissionselektrode (11), eine Extraktionselektrode (12) und eine leitfähige Flüssigkeit, die auf der Emissionselektrode (11) abgelagert ist, das System (1) ferner umfassend einen Stromgenerator (20), der mit der Emissionselektrode (11) verbunden ist, und einen Spannungsgenerator (22), der mit der Extraktionselektrode (12) verbunden ist, das System (1) umfassend eine Steuerung (24), die mit dem Stromgenerator (20) und dem Spannungsgenerator (22) verbunden ist, wobei die Steuerung zum Implementieren des Verfahrens (100) nach einem der vorhergehenden Ansprüche geeignet ist.

12. System (1) nach Anspruch 11, **dadurch gekennzeichnet, dass** die leitfähige Flüssigkeit eines von einer ionischen Flüssigkeit, einer leitfähig gemachten Flüssigkeit oder einem flüssigen oder geschmolzenen Metall umfasst.

13. Satellit, insbesondere von dem Typ CubeSat, umfassend ein Ionenantriebssystem (1) nach einem der Ansprüche 11 oder 12.

**Claims**

1. Method (100) for controlling an ion thruster (10), the ion thruster comprising an emission electrode (11), an extraction electrode (12) and a conductive liquid deposited on the emission electrode (11), the ion thruster (10) being suitable for emitting an ion beam when an electric field is applied to the conductive liquid, the ion beam being suitable for providing the thruster (10) with thrust, the thrust depending on an emission current $I_{em}$ and an ion emission speed, **characterized in that** the method (100) comprises the following steps:

   - adjusting (102) the emission current to a setpoint $I_c$ by applying a threshold emission potential $V_{thresh}$ to the emission electrode by means of a current generator; and
   - when the setpoint $I_c$ of the emission current is reached, adjusting (104) the emission speed by applying an extraction potential $V_{ext}$ to the extraction electrode by means of a voltage generator, so as to bring the emission potential $V_{em}$ to a predetermined value $V_{empr} = V_{thresh} + V_{ext}$.

2. Method (100) according to claim 1, **characterized in that** the step (102) of adjusting the emission current is implemented by gradually increasing the value of the potential applied to the emission electrode from 0 to the threshold value $V_{thresh}$ for which the emission current $I_{em}$ reaches the setpoint $I_c$.

3. Method (100) according to claim 1 or 2, **characterized in that** the step (104) of adjusting the emission speed is implemented by one of the following steps:

   - applying a potential of 0 V,
   - applying a potential having the same sign as the emission potential or
   - applying a potential having the opposite sign relative to that of the emission potential.

4. Method (100) according to any one of the preceding claims, **characterized in that** the step (102) of adjusting the emission current may comprise a step of automatically controlling the setpoint $I_c$ of the emission current.

5. Method (100) according to any one of the preceding claims, **characterized in that** the step (102) of adjusting the emission current further comprises a step (106) of setting the emission current.

6. Method (100) according to claim 5, **characterized in that** setting the emission current is implemented by setting the potential applied to the emission electrode $V_{em}$.

7. Method (100) according to any one of the preceding claims, **characterized in that** the step (104) of adjusting the emission speed further comprises a step (108) of setting the emission speed.

8. Method (100) according to claim 7, **characterized in that** the emission speed is set by adjusting the extraction potential $V_{ext}$.

9. Method (100) according to any one of the preceding claims, **characterized in that** it further comprises a step (110) of stopping the ion thruster (10), the stopping step comprising the following steps.

   - gradually reducing the value of the extraction potential $V_{ext}$ so as to obtain $V_{ext} = 0$ and $V_{em} = V_{thresh}$,
   - gradually reducing the value of the emission potential $V_{em}$ so as to obtain $V_{em} = 0$.

**10.** Method (100) according to the preceding claim in combination with claims 5 and 7, **characterized in that** it comprises an iteration of the steps of adjusting (102) and setting (106) the emission current, adjusting (104) and setting (108) the emission speed and the stopping step (110), the polarities of the emission potential $V_{em}$ and of the extraction potential being inverted in each new repetition cycle compared with the previous cycle.

**11.** Ion thruster system (1) comprising an ion thruster (10) which comprises an emission electrode (11), an extraction electrode (12) and a conductive liquid deposited on the emission electrode (11), the system (1) further comprising a current generator (20) connected to the emission electrode (11), and a voltage generator (22) connected to the extraction electrode (12), the system (1) comprising a controller (24) connected to the current generator (20) and to the voltage generator (22), the controller being suitable for carrying out the method (100) according to any one of the preceding claims.

**12.** System (1) according to claim 11, **characterized in that** the conductive liquid comprises one from an ionic liquid, a liquid made to be conductive, and a liquid or molten metal.

**13.** Satellite, particularly of the CubeSat type, comprising an ion thruster system (1) according to one of claims 11 or 12.

Fig. 1

100

Réglage du courant d'émission à une
valeur de consigne I$_c$ ⌐ 102

Réglage de la vitesse
d'émission ⌐ 104

Ajustement du courant
d'émission ⌐ 106

+/-

120

Ajustement de la vitesse
d'émission ⌐ 108

Arrêt ⌐ 110

Fig. 2

Fig. 3

Fig. 4

Fig. 5

Fig. 6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **P. C. LOZANO**. Less in Sapce. *American Scientist*, 2016, vol. 104, 270
- **S. DANDAVINO et al.** Microfabricated electrospray emitter arrays with integrated extractor and accelerator electrodes for the propulsion of small spacecraft. *J. Micromech. Microeng.*, 2014, vol. 24, 075011
- **I. VASILJEVICH et al.** Development of an Indium mN-FEEP Thruster. *44th AIAA/ASME/SAE/ASEE Joint Propulsion Conference & Exhibit*, 21 July 2008